# EUROPEAN PATENT SPECIFICATION

(11) **EP 3 106 236 B1**
(45) Date of publication and mention of the grant of the patent: **25.12.2019**
(21) Application number: 15172419.2
(22) Date of filing: 16.06.2015
(51) Int. Cl.: C04B 28/04, C04B 28/26, B09B 3/00, C04B 18/02

(54) **PROCESS FOR PREPARATION OF A RECYCLED AGGREGATE**
VERFAHREN ZUR VORBEREITUNG VON REZYKLIERTEN GRANULATEN
METHODE DE PREPARATION DE GRANULATS RECYCLÉS

(43) Date of publication of application: 21.12.2016
(73) Proprietor: Consorzio Cerea S.p.A., 37053 Cerea (VR) (IT)
(72) Inventor: TAVELLIN, Giuseppe Domenico, 37053 Cerea (Verona) (IT); FACCIO, Andrea, 37134 Verona (IT); BIGHIGNOLI, Cesare, 37121 Verona (IT); TROIANI, Alessandro, 37058 Sanguinetto (Verona) (IT)
(74) Representative: Biggi, Cristina

(56) References cited:
- EP-A1- 2 272 598
- JP-A- H07 124 535
- US-A- 5 769 936
- US-A1- 2001 049 404
- US-A1- 2006 267 240

## Description

The present invention refers in general terms to a cement composition with slow release of chlorides comprising raw materials recovered from waste, and to a process for its preparation. Said composition is produced in the form of aggregates useful in particular as an inert composition in the formulation of concretes and the like.

### Prior art

Concrete is a conglomerate of artificial origin obtained by mixing a binder, generally cement, with water and inert aggregates having different grain sizes. The excellent mechanical characteristics thereof, in particular the resistance to compression combined, in the case of reinforced concrete, with high resistance to traction, make concrete the construction material most widely used for realising buildings for civil and industrial use.

The aggregates used in the production of concrete can be materials of natural or artificial origin or coming from operations of treatment/recycling of waste of various origin.

Naturally-originating aggregates include for example gravel and alluvial sands, while artificial aggregates include the so-termed light aggregates, such as expanded clays and vermiculites.

In recent years aggregates for use in cement or bituminous conglomerates have been placed on the market, which aggregates are obtained from rejects or waste, such as for example waste from demolition of buildings, rejects of prefabricated elements production cycle or waste (including hazardous waste) coming from various sectors of the building sector.

Patent US 5,769,936 describes for example a production process of granulated fly ash, starting from fly ash obtained as a by-product of the combustion reaction of carbon, by addition of water, a water-soluble polymer and optionally cement, for increasing the mechanical resistance of the granulate. The granulated fly ashes are used as inert materials in the production of bituminous conglomerates.

Patent EP 2272598 describes a production process of aggregates using a mixture of waste of different types, among which quarry waste, demolition waste, waste originating from steel working. The waste is subjected to cycles of storage and humidification which lead to the inertisation of the waste and its consolidation into granules.

The patent application US2006/0267240A1 discloses a method for manufacturing aggregates wherein a first material comprising particles of sand is mixed with a second material comprising cement and water, thereby forming a mortar, said mortar being cured and crushed.

The patent application US2001/0049404A1 discloses an aggregate comprising crushed fragments of a cured cementitious mixture comprising cement, bottom ash or fly ash and optionally crushed glass.

The document JP H07 124535 discloses a composition based on cement and containing lignosulfonate, lime/gypsum and a silicate, preferably aluminium silicate, as curing/coagulating agent for incineration ash to obtain a building material having high hardness.

The chemical-physical characteristics of the aggregates obtained by waste treatment and recycling operations depend on the initial composition of the treated waste as well as on the process used for production of the aggregate. As the durability of the concrete is influenced by various factors, among which also the phenomenon of chemical reactions able to alter the physical-mechanical properties, the chemical-physical characteristics of the recycled aggregates have a significant impact on the service life of concrete constructions.

In this regard, it has been known for some time that chlorides have a damaging effect on both reinforced concrete, as they exert a corrosive action on the metal parts of the reinforcements, and on the conglomerate itself, in which the damage takes the form of interaction among the chloride ions and the alkaline components of the material.

The concrete when laid can come into contact which chlorides from external sources, for example salt water in maritime constructions, or deicing salts such as those used for the removal of ice during winter. Materials constituting concrete can also contain disposable chloride ions able to set off corrosion phenomena and degradation of the material, including in the absence of contact with chlorides coming from external sources.

When used in the formulation of concrete, the aggregates obtained from the treatment and recycling of waste will therefore have to exhibit a behaviour that is as far as possible inert, i.e. a low release of chloride ions and the hazardous substances contained therein, such as for example metals and/or semi-metals.

The applicants have found that when a particular waste material, such as for example light and/or heavy ashes resulting from incineration of wastes, is mixed and/or treated with cement and silicates, it is possible to obtain a cement aggregate having a low release of chlorides and metals and/or semi-metals useful as an inert composition for formulating concrete and usable in place of, or also in addition to, the commonly-used natural or artificial aggregates.

### Summary of the invention

In a first aspect, the present invention relates to a process for preparation of a recycled aggregate comprising steps of:
(a) mixing a waste material with cement and at least one silicate;
(b) first curing of the material in arrival from stage (a);
(c) crushing of the material subjected to the first curing;
(d) second curing of the material obtained by the crushing stage (c).

In a further aspect, the invention concerns a composition obtained (or obtainable) by means of the present process, preferably in the form of aggregates, and its use as an inert component for the formulation of concrete.

An additional aspect of the present invention is constituted by a concrete comprising at least a recycled aggregate obtained (or obtainable) with the present invention.

The advantages of the process of the present invention will emerge from the detailed description and the examples that follow, which however only have illustrative and non-limiting purpose.

### Detailed description

In the present description and the appended claims, all the percentages are intended as weight percentages, unless otherwise indicated.

The term "recycled aggregate" relates to an aggregate obtained (or obtainable) from a treatment process of a waste material.

The term "waste material" relates to material coming from processes of disposing and/or treatment of urban or special wastes, hazardous or non-hazardous, such as for example: light ash and heavy ash deriving from heat processes, materials originating from reclamation of polluted terrains, industrial process sludges and the like.

The term "heavy ash" relates to the ash collected in the grids of heat treatment of waste.

The term "intrabinding" relates to the compacting action performed by the binder on the particles constituting a single aggregate.

The term "interbinding" relates to the compacting action among various aggregates performed by the binder.

As mentioned above, the present invention relates to a process for preparation of a recycled aggregate comprising the steps of:
(a) mixing a waste material with cement and at least one silicate;
(b) first curing of the material in arrival from stage (a);
(c) crushing of the material subjected to the first curing;
(d) second curing of the material obtained by the crushing stage (c).

The waste material used in the present process is preferably a solid, powdery or not powdery, or a sludge that can be shovelled and can be a material coming from urban or special wastes, hazardous or not (for a definition of waste categories see UE Regulation UE 1357/2014 and Decision 2014/955/UE). The waste material of the present process is preferably selected from among: light or heavy ash deriving from thermal processes, waste from reclamation of polluted terrain, sludge from industrial treatment, light or heavy ash from thermal treatments being particularly preferred. Heavy ash is generally a coarse granular material contaminated by metallic fragments of various types. The waste materials listed above can contain even significant percentage quantities of chlorides. For example, the heavy ash deriving from the combustion of urban solid waste contains chloride ions deriving for example from the combustion of plastic materials incorporating chlorides, such as PVC.

The waste material used in the present process preferably has at least one of the following characteristics:
- grain size comprised between 1-10mm. In the present process, dimensions of greater than 10 mm could lead to obtaining final aggregates with physical characteristics which would prove not very suitable for specific use as aggregates for concrete; and/or
- an organic fraction of lower than 9.0% by weight, preferably lower than 5.0% by weight. Examples of organic material contributing to the organic fraction are typically timber and its derivatives, leaves, topsoil and the like; and/or
- a clay content of lower than 5.0% by weight; and/or
- a moisture content measured at 25°C comprised between 5% and 25% by weight. To this end, in fact, it is noted that a moisture content not comprised within the range indicated could compromise the binding capacity of the cement, leading to the formation of friable recycled aggregates or with low mechanical strength. Optimal moisture values can be achieved, for example, by wetting or drying the incoming waste material, as the case may be; and/or
- a dry residue at 550°C greater than or equal to 40% by weight.

The waste materials usable in the present process can further contain heavy metals and/or semi-metals, such as Zn, Cu, Pb, Cd, Mo, V, As, Sb, etc. In the case of hazardous wastes, the concentration of the metals and/or semi-metals is such as to give the waste material at least one of the hazardous characteristics indicated in Regulation UE 1357/2014.

Should the waste material intended to be used not possess the optimal chemical-physical characteristics for use in the present process, according to a first variant the process of the invention further comprises at least one of the following steps of pre-treatment of the waste material, said steps being carried out upstream of the mixing stage (a):
(i) screening of the waste material, using for example belts, vibrating screens, grids etc., with the aim of obtaining a material having a grain size falling within the above-indicated range; and/or
(ii) storage of the waste material with the aim of optimising the moisture content and the physical characteristics thereof. For this purpose, during the step of storage the waste material can optionally be moistened with water; and/or
(iii) demetallisation, for example using magnets, for removing the metallic parts that might be present in the waste material.

Steps from (i) to (iii) can be carried out using methods and machinery that are known in the art.

In a further variant, the process of the invention comprises all steps from (i) to (iii), which are carried out in the indicated order.

In a further variant, the process of the invention comprises more than a step of storage of the waste material; in particular, the process for preparation of a recycled aggregate can comprise the following steps and passages:
(i) screening of the waste material;
(iia) first storage;
(iii) demetallisation;
(iib) second storage;
   (a) mixing a waste material with cement and at least one silicate;
   (b) first curing of the material in arrival from stage (a);
   (c) crushing of the material subjected to the first curing;
   (d) second curing of the material obtained by the crushing stage (c),
   said steps and stages being carried out in the indicated order.

According to a further embodiment, the present process also comprises a stage of adjusting the pH value, which can be performed at the end of the demetallisation stage (iii) or, more preferably, during the mixing stage (a). Said stage of adjusting the pH value can be performed, for example, by the addition of products having acidic characteristics known to a person skilled in the art, so as to adjust the pH to values that are not extreme. Advantageously, in this way the degree of stability of the end product obtained can be increased, especially as regards the release of heavy metals possibly contained in the waste materials and therefore present also in the aggregates obtained.

The applicants have found that especially thanks to the mixing stage (a) of the waste material with cement and at least one silicate, it is possible to obtain aggregates having a low release of chlorides in the test conditions described in the following.

In stage (a) of the present process, it is possible to use any type of cement known in the art, for example Portland type I or II, preferably in the form of cement paste (or grout). Preferably the cement is of Portland type (for general reference see for example http://it.wikipedia.org/wiki/Cemento).

In any event, the cement chosen can be used in the present process in quantities comprised between about 5% and about 20% by weight, with respect to the total weight of the composition, even more preferably comprised between about 10% and about 15 %. It is observed that lower or higher percentages may lead to final compositions having mechanical strength and/or compactness poorly suited for use as aggregates for formulation of concrete. Cement, in fact, is especially useful as a binder and hardener because it is capable, if hydratated with water or atmospheric moisture, of conferring on the aggregates a mechanical strength similar to that of stone.

The at least one silicate useful for realising the process of the invention is preferably selected from among sodium silicates having the following general formula

M₂O·n(SiO₂)

wherein n is an integer or a fraction comprised between 1.6 and 4, the sodium silicate being (CAS No: 1344-09-8) particularly preferred; n represents the molar ratio between SiO₂ and Na₂O.

The at least one sodium silicate can be used in the present process in solid form, preferably hydrated, or, more preferably in acqueous solution, in quantities comprised between about 1% and about 10% by weight, preferably between about 2% and about 5% by weight of silicate with respect to the total weight of the composition.

In a variant of the process, during stage (a) a fluidising additive, preferably acrylic, can optionally be added to the mixture. In one embodiment, said additive is an aqueous solution of acrylic polymers, even more preferably an aqueous solution having a concentration comprised between 25% and 35% by weight of acrylic polymers, free from formaldehyde. An example of a preferred fluidizing additive is Dynamon-SP1® (Mapei). When present, the additive is used in quantities comprised between about 0.01%, about 0.15% by weight, preferably between about 0.05% and 0.12% by weight with respect to the total weight of the mixture.

In a further variant, during stage (a), water can be added to the mixture.

In a further variant, during the mixing stage (a), the present process comprises the addition of a granulation initiator to the mixture. In practice, the initiator is any component capable of triggering and promoting the mechanical breakdown of the mixture, substantially avoiding the formation of a single compact mass. The presence of the initiator is therefore useful for favouring the formation of the final material in the form of pseudo-spherical aggregates, preventing the formation of a material having too large dimensions, which would be unlikely to lead to the desired granular product. Thanks to the mechanical action of the mixing, this initiator crushes the mass in agitation leading to the formation of aggregates having a form and dimensions which, after curing and fragmentation as described in detail below, prove to be particularly suited to use as an inert component for the formulation of concrete. Said initiator is preferably a waste material obtained by the screening step (i) described above.

The mixing stage (a) can be actuated by mixing, in an appropriate mixer-reactor, the cement, the at least one silicate and optionally the other above-mentioned components in any order.

Alternatively and preferably the mixing stage (a) can be actuated by premixing the waste material and the cement optionally in the presence of a fluidiser, for some minutes, preferably 1-10 minutes, more preferably 1-5 minutes, and by then adding a suitable quantity of at least one silicate.

After the addition of the silicate, the mixture takes on an appearance of malleable and ductile granules.

The material thus-obtained is subjected to the subsequent stages of first controlled curing (b), crushing (c) and second curing (d), so as to obtain a recycled aggregate having high physical and mechanical strength.

In particular, the stage (b) of first controlled curing is important because in this way the material solidifies, thanks especially to the intrabinding action of the silicate and of the cement. The latter, in fact, by resting the soft, moist mass obtained after mixing, is able to initiate the binding action, thus compacting both the individual aggregates (intrabinding action) and the entire mass consisting of the plurality of aggregates (interbinding action). During this curing it is therefore important to avoid the interbinding action between the aggregates prevailing over the intrabinding action, internal to each aggregate. If this were to occur, in fact, a compact, solid final mass would be obtained, having dimensions equal to the entire mass and unsuitable for the preparation of an aggregate for concretes.

Preferably, the first curing (b) occurs at an external temperature comprised between about 15°C and about 40°C, for a time comprised between 1 and 24 hours depending on the temperature. In this connection, if curing exceeds the indicated times, during subsequent crushing the material thus obtained would lead to the formation of solid blocks, with poor physical and mechanical characteristics, poorly suited for the specific use. Similarly, too short curing times would lead to the formation of friable granular material, easily broken up and having a degree of compactness and/or solidity making it unlikely to be usable as an inert component for the formulation of concrete.

The subsequent crushing (stage (c)) of the material obtained after stage (b) and made up of solid aggregates weakly bonded together, is performed by means of a physical treatment, for example of mechanical movement or by means of displacement, for example with shovels.

The stage (d) of second curing is important because in this way the crushed material further solidifies and becomes inert, thanks especially to the intrabinding action of the silicate and the cement. The latter, in fact, by resting the aggregates obtained after crushing, is able to solidify them, thus compacting the individual aggregates (intrabinding action).

Preferably, the curing (d) occurs at a temperature comprised between about 15°C and about 40°C, even more preferably for a time of at least 7 days.

The end of stage (d) can be checked, for example, by means of cylinder compaction tests, and by calculating the aggregates' final crush resistance. Crush resistance is an indicator of the hardness and therefore of the stability of the aggregate obtained, and may depend on the cement curing start and finish times, the storage temperature and the dimensions of the mass being cured. In the present process, the final curing stage (d) is prolonged until compaction factors are obtained preferably greater than 6 MPa, measured in accordance with UNI EN 13055-1:2003.

If necessary, on conclusion of the second curing stage (d) it is possible to subject the material to a screening procedure, in order to obtain recycled aggregates with the desired grain size, for example having similar dimensions and/or diameter.

As indicated above, the present process makes it possible to obtain a recycled aggregate, usable especially as an inert component for the formulation of concretes.

A further aspect of the invention concerns a recycled aggregate obtained (or obtainable) by the previously-described process, and its use as an inert component for the formulation of concrete.

The recycled aggregate of the invention can replace entirely or in part the natural aggregates commonly used as inert components for concrete.

An additional aspect of the present invention is constituted by a concrete comprising at least a recycled aggregate obtained (or obtainable) with the previously-described process.

With the reduced release of chlorides, the use of the recycled aggregate obtained by the process of the invention in cement conglomerates is particularly advantageous with respect to the use of recycled aggregates deriving from other treatment processes and/or recycling of waste of the prior art. The use of the recycled aggregate of the invention in fact leads to a considerable reduction in the available chlorides, i.e. mobile chlorides, within the concrete.

Further, as the percentage of chlorides in concrete is strictly regulated by international standards, thanks to the lower release of chlorides, by using the recycled aggregates according to the invention it is possible to increase the quantity of recycled aggregates present in a concrete in replacement for the natural and/or artificial aggregates, given a same overall chloride content.

Further, the recycled aggregates obtained by the process of the invention are characterised by low release of metals and/or semi-metals that might be present.

The recycled aggregate obtained by the process of the invention can consequently also be disposed of or used as inert non-hazardous waste, without requiring additional inertisation treatments.

With the present invention, it is possible to recycle hazardous wastes in a safe and eco-compatible manner. The present invention, in fact, enables treatment of waste materials with a low environmental impact because thermal or washing treatments are substantially avoided, unlike what happens in the prior art for the treatment of hazardous wastes.

### EXPERIMENTAL PART

### Measuring method

Grain size (of the waste in entry and the aggregates): EN 933-1
Organic fraction (of the waste in entry): EN 1744-1
Classification of the constituents Clay content (of the waste in entry): EN 12620
Moisture content (of the waste in entry): EN 12620
Dry residue (of the waste in entry): EN 1744-1
pH (of the waste in entry and the aggregates): EN 12457
Compaction factor: UNI EN 13055-1:2003
Resistance to crushing EN 1097-2
Chlorides release: EN 1744-1

### Example 1

A waste material constituted by heavy ash coming from the combustion of Solid Urban Waste, previously subjected to the preliminary steps of screening, storage and demetallisation, was used to obtain the recycled aggregates, in the following conditions:
(a) 50.0 Kg of waste material having a grain size comprised between 0 and 10 mm were mixed with 7.5 Kg of Type 2 Portland cement (resistance class 42.5) for a time of 1-5 minutes in the presence of 0.4 Kg of water and 50 grams of Dynamon_SP1® (Mapei). Then 4.0 Kg of a sodium silicate having the following chemical-physical characteristics were added:
   - empirical formula: Na₂O·(SiO₂)ₙ wherein n=3.4
   - appearance at 25°C: viscous liquid
   - relative density at 20°C: 1.365 g/ml
   - pH (solution as such, 20°C): 11.39
   - solid residue at 105°C: 44.43 %
(b) the material obtained from the mixing was then subjected to controlled curing for about 12 hours at about 25°C;
(c) thereafter the material was mechanically crushed and
(d) left to cure for a second time for about 7 days, obtaining recycled aggregates having a resistance to fragmentation of 5.8 MPa.

The recycled aggregates obtained by Example 1 were subjected to tests for release of chlorides, the result of which are reported in Table 1.

### Example 2 - comparative

By using the same recycled material used for realising Example 1 of the invention, already subjected to the preliminary steps of screening, storage and demetallisation, a recycled aggregate was realised by reproducing what is described in Example 1 of US patent 5,769,936. The recycled aggregates were subjected to tests for release of chlorides, the result of which are reported in Table 1.

Table 1, column T.Q., reports, for further comparison, the results of the chloride release tests carried out on the waste material as it appeared following the preliminary steps of screening, storage and demetallisation.

**Table 1**

| | | T.Q. | Example 1 | Example 2 comparative |
|---|---|---|---|---|
| Chlorides | mg/l | 954 | 290 | 670 |
| Ba | mg/l | 0.93 | 0.69 | 0.90 |
| Cu | mg/l | 0.46 | 0.11 | 0.26 |
| Zn | mg/l | 0.36 | 0.027 | 0.12 |
| V | µg/l | 7.8 | 4.4 | 5.1 |
| As | µg/l | 6.2 | 4.9 | 5.7 |
| Cr (TOT) | µg/l | 28 | 22 | 30 |
| Pb | µg/l | 550 | 220 | 465 |
| Mo | mg/l | 0.059 | 0.008 | 0.041 |
| pH | | 12.4 | 12.3 | 12.3 |

## Claims

1. A process for preparation of a recycled aggregate comprising the steps of:
(a) mixing a waste material with cement and at least one silicate;
(b) first curing of the material in arrival from stage (a);
(c) crushing of the material subjected to the first curing;
(d) second curing of the material obtained by the crushing stage (c).

2. The process according to claim 1, wherein upstream of the mixing stage (a) at least one of following steps is carried out: (i) screening, (ii) storage of the waste material, optionally comprising humidification of the waste material with water and/or (iii) demetallisation.

3. The process according to claim 1 or 2, comprising the following steps and stages:
(i) screening of the waste material,
(iia) first storage;
(iii) demetallisation;
(iib) second storage;
wherein said steps and stages are carried out in the indicated order upstream of the mixing step (a).

4. The process according to any one of claims from 1 to 3, wherein the cement is of Portland type.

5. The process according to any one of claims from 1 to 4, wherein the cement is added during the mixing step (a) in a quantity comprised between 5% and 20% by weight, preferably between 10% and 15% by weight.

6. The process according to any one of claims from 1 to 5, wherein the at least one silicate is selected from sodium silicates having a general formula
M₂O·n(SiO₂)
wherein n is an integer or a fraction comprised between 1.6 and 4.

7. The process according to any one of claims from 1 to 6, wherein the at least one silicate is added during the mixing step (a) in quantities comprised between 1% and 10% by weight, preferably between 2% and 5% by weight.

8. The process according to any one of claims from 1 to 7, wherein the sodium silicate is added in a form of an aqueous solution.

9. The process according to any one of claims from 1 to 8, wherein during stage (a) a fluidising additive is added, preferably acrylic.

10. The process according to any of claims from 1 to 9, wherein the waste material comprises an organic fraction lower than 9.0% by weight, preferably lower than 5.0% by weight.

11. The process according to any of claims from 1 to 10, wherein the waste material has a clay content of lower than 5.0% by weight.

12. The process according to any one of claims from 1 to 11, wherein the first curing (b) takes place at an external temperature comprised between 15°C and 40°C for a time comprised between 1 and 24 hours and the second curing (d) takes place at a temperature comprised between 15°C and 40°C, preferably for a time of at least 7 days.

## Patentansprüche

1. Verfahren zur Vorbereitung von rezyklierten Aggregaten, umfassend die Schritte:
(a) Mischen eines Abfallmaterials mit Zement und mindestens einem Silikat;
(b) erstes Aushärten des Materials eintreffend von Stufe (a);
(c) Zerkleinern des Materials, das dem ersten Aushärten unterzogen wurde;
(d) zweites Aushärten des durch die Zerkleinerungsstufe (c) erhaltenen Materials.

2. Verfahren nach Anspruch 1, **dadurch gekennzeichnet, dass** vor der Mischstufe (a) mindestens einer der folgenden Schritte durchgeführt wird: (i) Sieben, (ii) Lagerung des Abfallmaterials, gegebenenfalls umfassend Befeuchten des Abfallmaterials mit Wasser und/oder (iii) Demetallisierung.

3. Verfahren nach Anspruch 1 oder 2, umfassend die folgenden Schritte und Stufen:
(i) Sieben des Abfallmaterials,
(iia) erste Lagerung;
(iii) Demetallisierung;
(iib) zweite Lagerung;
wobei die Schritte und Stufen in der angegebenen Reihenfolge vor dem Mischschritt (a) ausgeführt werden.

4. Verfahren nach einem der Ansprüche 1 bis 3, wobei der Zement vom Portland-Typ ist.

5. Verfahren nach einem der Ansprüche 1 bis 4, wobei der Zement während des Mischschritts (a) in einer Menge zwischen 5 und 20 Gew.-%, vorzugsweise zwischen 10 und 15 Gew.-% zugesetzt wird.

6. Verfahren nach einem der Ansprüche 1 bis 5, wobei das mindestens eine Silikat aus Natriumsilikaten ausgewählt ist, mit einer allgemeinen Formel
M₂O·n(SiO₂)
wobei n eine ganze Zahl oder ein Bruch zwischen 1,6 und 4 ist.

7. Verfahren nach einem der Ansprüche 1 bis 6, wobei das mindestens eine Silikat während des Mischschritts (a) in Mengen zwischen 1 und 10 Gew.-%, vorzugsweise zwischen 2 und 5 Gew.-% zugesetzt wird.

8. Verfahren nach einem der Ansprüche 1 bis 7, wobei das Natriumsilikat in Form einer wässrigen Lösung zugesetzt wird.

9. Verfahren nach einem der Ansprüche 1 bis 8, wobei während der Stufe (a) ein fluidisierendes Additiv, vorzugsweise Acryl, zugesetzt wird.

10. Verfahren nach einem der Ansprüche 1 bis 9, wobei das Abfallmaterial einen organischen Anteil von weniger als 9,0 Gew.-%, vorzugsweise weniger als 5,0 Gew.-% umfasst.

11. Verfahren nach einem der Ansprüche 1 bis 10, wobei das Abfallmaterial einen Tongehalt von weniger als 5,0 Gew.-% aufweist.

12. Verfahren nach einem der Ansprüche 1 bis 11, wobei das erste Aushärten (b) bei einer Außentemperatur zwischen 15 °C und 40 °C für einen Zeitraum zwischen 1 und 24 Stunden stattfindet und das zweite Aushärten (d) bei einer Temperatur zwischen 15 °C und 40 °C, vorzugsweise für einen Zeitraum von mindestens 7 Tagen stattfindet.

## Revendications

1. Méthode de préparation de granulats recyclés comprenant les étapes de :
(a) mélanger des déchets à du ciment et à au moins un silicate ;
(b) première cure du matériau en provenance de la phase (a) ;
(c) broyer le matériau soumis à la première cure ;
(d) seconde cure du matériau obtenu à la phase de broyage (c).

2. Méthode selon la revendication 1, dans laquelle en amont de la phase de mélange (a), au moins une des étapes suivantes est effectuée : (i) criblage, (ii) stockage des déchets, comprenant éventuellement l'humidification des déchets avec de l'eau et/ou (iii) démétallisation.

3. Méthode selon la revendication 1 ou 2, comprenant les étapes et les phases suivantes :
(i) criblage des déchets,
(iia) premier stockage ;
(iii) démétallisation ;
(iib) second stockage ;
dans laquelle lesdites étapes et phases sont effectuées dans l'ordre indiqué en amont de l'étape de mélange (a) .

4. Méthode selon l'une quelconque des revendications de 1 à 3, dans laquelle le ciment est du type Portland.

5. Méthode selon l'une quelconque des revendications de 1 à 4, dans laquelle le ciment est ajouté pendant l'étape de mélange (a) dans une quantité comprise entre 5 et 20 % en poids, de préférence entre 10 et 15 % en poids.

6. Méthode selon l'une quelconque des revendications de 1 à 5, dans laquelle l'au moins un silicate est sélectionné à partir de silicates de sodium ayant une formule générale
M₂O·n(SiO₂)
où n est un entier ou une fraction comprise entre 1,6 et 4.

7. Méthode selon l'une quelconque des revendications de 1 à 6, dans laquelle l'au moins un silicate est ajouté pendant l'étape de mélange (a) dans des quantités comprises entre 1 et 10 % en poids, de préférence entre 2 et 5 % en poids.

8. Méthode selon l'une quelconque des revendications de 1 à 7, dans laquelle le silicate de sodium est ajouté sous une forme de solution aqueuse.

9. Méthode selon l'une quelconque des revendications de 1 à 8, dans laquelle pendant l'étape (a), un additif de fluidisation est ajouté, de préférence de l'acrylique.

10. Méthode selon l'une quelconque des revendications de 1 à 9, dans laquelle les déchets comprennent une fraction organique inférieure à 9,0 % en poids, de préférence inférieure à 5,0 % en poids.

11. Méthode selon l'une quelconque des revendications de 1 à 10, dans laquelle les déchets comprennent une teneur en argile inférieure à 5,0 % en poids.

12. Méthode selon l'une quelconque des revendications de 1 à 11, dans laquelle la première cure (b) se déroule à une température extérieure comprise entre 15 et 40 °C pendant une durée comprise entre 1 et 24 heures et la seconde cure (d) se déroule à une température comprise entre 15 et 40 °C, de préférence pendant une durée d'au moins 7 jours.
